# EUROPÄISCHE PATENTSCHRIFT

(11) **EP 0 846 922 B1**
(45) Veröffentlichungstag und Bekanntmachung des Hinweises auf die Patenterteilung: **28.08.2002**
(21) Anmeldenummer: 97117712.6
(22) Anmeldetag: 13.10.1997
(51) Int. Cl.: F24D 12/02

(54) **Heizeinrichtung für eine Warmwasser-Heizungsanlage**
Heating device for a hot water heating installation
Appareil de chauffage pour installation de chauffage par eau chaude

(30) Priorität: 11.10.1996 DE 29617707 U
(43) Veröffentlichungstag der Anmeldung: 10.06.1998
(73) Patentinhaber: EWFE Brennwert-Heiztechnik GmbH, 28357 Bremen (DE)
(72) Erfinder: Teper, Herbert, 35096 Weimar/Nierderwalgern (CH)
(74) Vertreter: Goddar, Heinz J., Dr.

(56) Entgegenhaltungen:
- WO-A-83/02493
- GB-A- 2 161 590

## Beschreibung

Die Erfindung betrifft eine Heizeinrichtung für eine Warmwasser-Heizungsanlage mit einer Nennleistung von wenigstens ca. 100kW, mit einem eine Brennkammer aufweisenden, einzügig ausgebildeten Stahlkessel, in dessen Mantelraum, dessen Innenfläche eine erste Wärmetauscherfläche bildet, eine wasserführende Leitung angeordnet ist, deren eines Ende mit einer Rücklaufleitung und deren anderes Ende mit einer Vorlaufleitung verbunden ist, wobei die Brennkammer an ihrem stirnseitigen Ende mit einem Brenner versehen ist und die Wärmetauscherfläche zum Übertragen der Wärme der Verbrennungsgase an das Heizwasser durch wenigstens zwei außerhalb des Kessels und benachbart dazu an der Rücklaufleitung angeordnete Abgaswärmetauscher gebildet ist, wie sie aus der WO-A-8302493 bekannt ist.

Derartige Heizeinrichtungen mit einer Nennleistung ab 100 KW werden heute in einer Einheit gefertigt und mit einem vorgesetzten atmosphärischen oder gebläseunterstützen Brenner betrieben. Brennergeräusche werden bei diesen Kesseln mit einer Schalldämmhaube reduziert. Die Brenner werden in zwei Leistungsstufen oder modulierend zwischen 20 % und 100 % der Kesselleistung betrieben. Die Verbrennungsabgase geben ihre wärme an das Kesselwasser in zwei, drei oder vier Zügen ab. Die Wärmetauscherfläche befindet sich hierbei vollständig innerhalb des Kessels. Das Abgas wird mit einem Abgasstutzen an ein vorhandenes Abgassystem in dem Gebäude, in dem die Heizeinrichtung installiert ist, abgegeben. Das Abgassystem hat einen von der Kesselleistung abhängigen Querschnitt; z.B. benötigt ein Kessel mit einer Leistung von 200 kW mit Gebläsebrenner einen Rohrdurchmesser von 200 mm, mit einem atmosphärischen Brenner einen Rohrdurchmesser von 400 mm. Dies ist insoweit nachteilig, als in Altbauten in der Regel zahlreiche Schornsteinschächte mit kleineren Durchmessern als 200 mm vorhanden sind, so daß hier zeitaufwendige Schornsteinsanierungsarbeiten notwendig sind, um den nötigen Schachtquerschnitt zu erreichen.

Ein weiteres Problem besteht darin, daß die schmalen Türen und Maueröffnungen in Altbauten aufgrund der relativ großen Kesseldimensionen häufig vergrößert werden müssen. Für diese Kessel ist in der Regel ein Heizraum erforderlich, da die Verbrennungsluft aus der Raumluft bezogen wird.

Die Aufgabe der Erfindung besteht darin, eine Heizeinrichtung bereitzustellen, die durch die schmalen Türen und Maueröffnungen in Altbauten transportiert werden kann, ohne diese erweitern zu müssen.

Die Aufgabe der Erfindung liegt weiterhin darin, eine Heizeinrichtung anzugeben, deren Abgase problemlos auf mehrere (kleinere) Abgasschächte verteilt werden können.

Weiter besteht die Aufgabe der vorliegenden Erfindung darin, eine Heizeinrichtung zu schaffen, deren Brennerleistung von 20 bis 100 % moduliert werden kann und bei der die Brennergeräusche minimiert sind, so daß keine zusätzliche Schallschutzhaube benötigt wird.

Diese Aufgabe wird durch eine Heizeinrichtung nach Anspruch 1 gelöst.

Die erfindungsgemäße Heizeinrichtung kann problemlos in kleinere Teileinheiten (Kessel, Wärmetauscher ...) zerlegt werden, so daß vorhandene, schmale Türen bzw. Maueröffnungen nicht erweitert werden müssen.

Darüber hinaus weist die erfindungsgemäße Konstruktion eine Reihe weiterer Vorteile auf. Dadurch daß die gesamte benötigte Wärmetauscherfläche in die innerhalb des Kessels befindliche Wärmetauscherfläche und die nachgeschalteten Abgaswärmetauscher aufgeteilt ist, kann durch eine entsprechende Dimensionierung der Wärmetauscher eine Taupunktunterschreitung im Kesselköprer verhindert werden. Dadurch kann der Kesselkörper aus einem einfachen, kostengünstigen Stahl gefertigt werden.

Das aus den zwei oder mehr Wärmetauschern austretende Abgas kann, abhängig von den Gegebenheiten vor Ort, direkt parallel oder auch über einen Abgassammler in ein Kunststoffabgassystem geleitet werden, Durch die parallele Führung des Abgases kann man z.B. bei einer Kesselleistung von 200 kW zwei Abgasrohre mit einer Nennweite von 100 mm in zwei Schächten mit der benötigten lichten Weite verwenden, ohne daß zeit- und kostenaufwändige Sanierungsarbeiten am Schornstein notwendig sind, um einen größeren Schachtquerschnitt zu erreichen.

Die Verbrennungsluft wird über einen weiteren Schacht, der über ein Rohr mit dem Kessel verbunden ist, angesaugt. Die Verbrennungsluft wird entweder an die Saugöffnung des Brennergebläses geführt oder umspült den gesamten Kesselinnenraum. Somit kann der Kesselraum luftunabhängig betrieben werden, was den Vorteil mit sich bringt, daß der Aufstellraum nicht mehr die Heizrichtlinien erfüllen muß und die hierzu notwendigen baulichen Maßnahmen entfallen.

In einer bevorzugten Ausführungsform ist je Wärmetauscher eine Rücklaufleitung ausgebildet, wobei die Rücklaufleitungen im Bereich zwischen den Wärmetauschern und dem Kessel zu einer einzigen Leitung zusammengeführt sind, die mit dem Kessel verbunden ist.

In einer bevorzugten Ausführungsform sind der Kessel und die Wärmetauscher so ausgelegt, daß der in den Wärmetauschern übertragene Anteil an der insgesamt übertragenen Wärmeleistung größer ist als der im Kessel übertragene Anteil. Bevorzugt beträgt dieser in den Wärmetauschern übertragene Anteil etwa 55 bis 65 % der gesamten Wärmeleistung.

Das Abgas aus den einzelnen Wärmetauschern kann entweder jeweils gesondert oder in einem Abgassammler zusammengeführt und als Sammelstrom zu dem Abgassystem des Gebäudes, in dem die Heizung installiert ist, geführt sein.

Vorzugsweise bestehen die Wärmetauscher aus Edelstahl.

Die Wärmetauscher können so dimensioniert sein, daß die Abgastemperatur nach den Wärmetauschern ca. 10 % über der Temperatur des Rücklaufwassers liegt.

Vorzugsweise ist die Heizeinrichtung in einem klapp- oder zerlegbaren Rahmen untergebracht. Dadurch wird die Zerlegung in kleinere, durch schmale Türen oder Maueröffnungen transportable Einheiten erheblich erleichtert.

Zweckmäßigerweise weist wenigstens eine Abmessung des Rahmens im geklappten oder zerlegten Zustand nicht mehr als 60 cm auf.

Vorzugsweise ist der Kesselkörper aus Stahl (ST 37) gefertigt, was dadurch ermöglicht wird, daß eine Taupunktunterschreitung im Kesselkörper verhindert wird. Dies stellt einen erheblichen Kostenvorteil dar.

Die Erfindung wird nachfolgend anhand eines Ausführungsbeispiels und unter Bezugnahme auf eine Zeichnung weiter erläutert, wobei:
Fig. 1 eine perspektivische, schematische Ansicht einer erfindungsgemäßen Heizeinrichtung zeigt;
Fig. 2 eine schematische Seitenansicht der erfindungsgemäßen Heizungseinrichtung nach Fig. 1 zeigt;
Fig. 3 eine schematische Rückansicht der Vorrichtung nach Fig. 2 in Richtung des Pfeils III zeigt; und
Fig. 4 eine schematische Draufsicht auf die Ausführungsform nach Fig. 2 in Richtung des Pfeils IV zeigt.

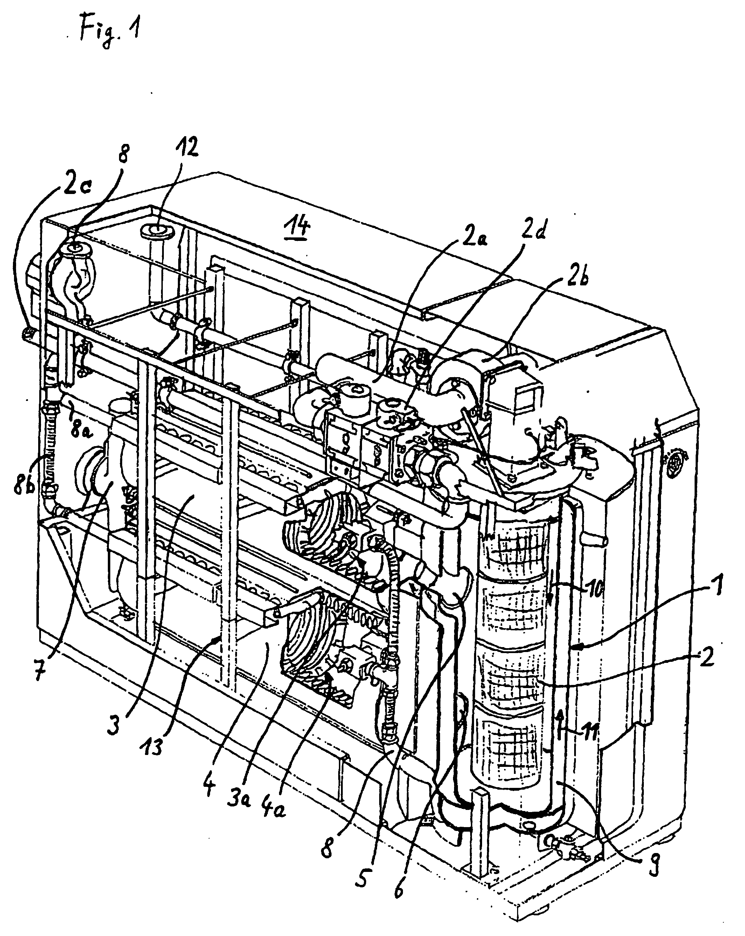

Zunächst sei auf die perspektivische Darstellung nach Fig. 1 Bezug genommen, aus der die wesentlichen Teile der erfindungsgemäßen Heizeinrichtung ersichtlich sind, nämlich ein Kessel 1 mit einem darin angeordneten Strahlungsbrenner 2 sowie die nachgeschalteten, parallel arbeitenden Abgas-Wärmetauscher 3 und 4. Der Brenner ist als.Gebläsebrenner ausgeführt, der seine Luft über ein Ansaugrohr 2a und ein Gebläse 2b und das Gas über eine Gasleitung 2c bezieht. Jeweils ein Abgaskanal 5, 6 führt aus dem Kesselinnenraum durch die Abgas-Wärmetauscher zum Abgasaustritt, wo die beiden Abgasströme in diesem Ausführungsbeispiel über einen Abgassammler 7 vereinigt und aus der Heizeinrichtung abgeführt werden. Der Ausgang des Abgassammlers wird nach der Montage der Heizanlage mit einem geeigneten Abgasrohr des betreffenden Gebäudes verbunden.

Die Abgaswärmetauscher 3, 4 übertragen die in den Abgasen enthaltene Wärme über Wärmetauschelemente 3a, 4a aus Edelstahl an das aus dem Heizungssystem zurückströmende Rücklaufwasser. Eine Rücklaufleitung 8 verzweigt sich im Bereich der Wärmetauscher 3, 4 in eine entsprechende Anzahl von Zweigen (in diesem Beispiel zwei) 8a, 8b. Im Bereich zwischen den Wärmetauschern und dem Kessel 1 sind die einzelnen Zweigleitungen wieder zu einer gemeinsamen Leitung 8 zusammengeführt, die in das bezüglich der Abgasströmung (Pfeil 10) stromabseitige Ende eines den Innenraum des Kessels 1 umgebenden Wassermantels 9 mündet. Am oberen, bezüglich der Wasserströmung (Pfeil 11) stromabseitigen Ende des Wassermantels 9 ist eine Vorlaufleitung 12 angeschlossen.

Sämtliche beschriebenen Teile sind in kompakter Weise in bzw. an einem zerlegbaren Rahmen 13 gehalten, der seinerseits von einer geräuschisolierenden Verkleidung 14 umhüllt ist.

Nachfolgend sei auf die Wärmeübertragung von den Abgasen auf das Heizungswasser eingegangen. Der Brenner 2 erzeugt innerhalb des Kessels 1 eine Abgasströmung in Richtung des Pfeils 10. Das im Gegenstrom (Pfeil 11) geführte Rücklaufwasser nimmt, hauptsächlich über Strahlung, einen Teil der durch die Verbrennung freigesetzten Wärme auf und verläßt den Wassermantel 9 als Vorlaufwasser mit Vorlauftemperatur durch die Vorlaufleitung 12.

Aus dem wassergekühlten Brennerraum entweichen die Abgase durch die beiden Abgaskanäle 5, 6 in die parallel angekoppelten Wärmetauscher 3, 4. Diese Wärmetauscher sind so ausgelegt, daß die Abgastemperatur bis auf etwa 10 % über der Heizwasserrücklauftemperatur abgekühlt wird. Die Auslegung ist weiterhin so, daß das Rücklaufwasser nach Passieren der Wärmetauscher eine Temperatur oberhalb des Taupunktes aufweist und thermisch günstig in den wassergekühlten Brennraum eingeleitet wird.

Durch die besondere Konstruktion des Brenners als Strahlungsbrenner mit geringer Flächenbelastung und kleinen Strömungsgeschwindigkeiten an der Brenneroberfläche ergibt sich als Vorteil eine Reduzierung der Verbrennungsgeräusche.

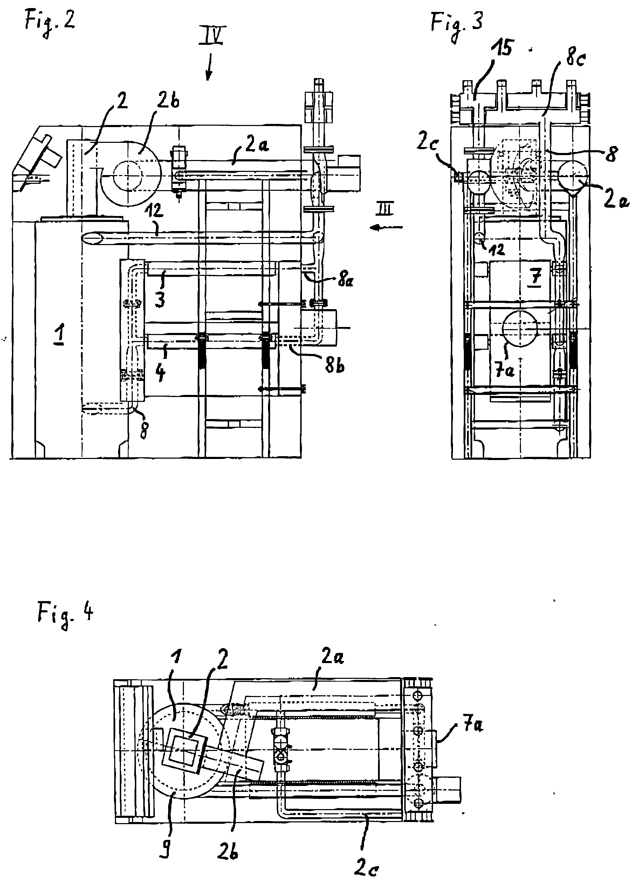

Fig. 2 bis 4 erläutern in schematischen Seiten-, Rück- und Draufsichten weiter den Aufbau der erfindungsgemäßen Heizeinrichtung nach Fig. 1. Rücklaufleitungen von mehreren Heizungssträngen sind an einen Rücklaufsammler 8c angeschlossen, aus dem eine Rücklaufleitung 8 nach Aufteilung in zwei Leitungen 8a, 8b zu den Wärmetauschern 3, 4 führt. Die Zweigleitungen sind anschließend erneut zu einer einheitlichen Rücklaufleitung 8 zusammengeführt, die in dem wassergekühlten Kessel 1 eintritt. Das weiterhin im Gegenstrom zu den Abgasen geführte Wasser wird im Kessel auf Vorlauftemperatur gebracht und tritt durch die Vorlaufleitung 12 aus dem Kessel aus. Wie aus Fig. 3 ersichtlich ist, mündet die Vorlaufleitung 12 in einen Vorlaufverteiler 15, der das Heizungswasser auf die verschiedenen Heizungsstränge verteilt.

Aus Fig. 2 bis 4 geht weiterhin die Anordnung des Gebläsebrenners 2 mit Luftansaugleitung 2a, Gebläse 2b und Gaszufuhrleitung 2c hervor.

Die aus dem Kessel austretenden und durch die Wärmetauscher 3, 4 geführten Abgase werden in einem Abgassammler 7 zusammengeführt und werden über einen Abgasstutzen 7b an eine Abgassystem abgegeben.

Die Heizeinrichtung wird auf einem klappbaren, zerlegbaren oder in sonstiger Weise verkleinerbaren Rahmen mit mehreren Einzelteilen aufgebaut, die alle durch eine 60 cm breite Tür in den Aufstellraum eingebracht werden können. Durch die Handlichkeit der Komponenten kann die Heizeinrichtung auch z.B. im Dachgeschoß eines Hauses installiert werden.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Heizeinrichtung für eine Warmwasser-Heizungsanlage mit einer Nennleistung von wenigstens ca. 100kW, mit einem eine Brennkammer (1) aufweisenden, einzügig ausgebildeten Stahlkessel, in dessen Mantelraum (9), dessen Innenfläche eine erste Wärmetauscherfläche bildet, eine wasserführende Leitung angeordnet ist, deren eines Ende mit einer Rücklaufleitung (8) und deren anderes Ende mit einer Vorlaufleitung (12) verbunden ist, wobei die Brennkammer (1) an ihrem stirnseitigen Ende mit einem Brenner (2) versehen ist und die Wärmetauscherfläche zum Übertragen der Wärme der Verbrennungsgase an das Heizwasser durch wenigstens zwei außerhalb des Kessels (1) und benachbart dazu an der Rücklaufleitung (8) angeordnete Abgaswärmetauscher (3, 4) gebildet ist, **dadurch gekennzeichnet, daß** die Abgaswärmetauscher (3, 4) in Parallelschaltung jeweils von einem Teil des Rücklaufwassers durchströmt sind.

2. Heizeinrichtung nach Anspruch 1, **dadurch gekennzeichnet, daß** je Wärmetauscher (3, 4) eine Rücklaufleitung (8a, 8b) ausgebildet ist, wobei die Rücklaufleitungen (8a, 8b) im Bereich zwischen den Wärmetauschern und dem Kessel zu einer einzigen Leitung (8) zusammengefaßt sind, die mit dem Kessel verbunden ist.

3. Heizeinrichtung nach Anspruch 1 oder 2, **dadurch gekennzeichnet, daß** der Kessel und die Wärmetauscher so ausgelegt sind, daß der in den Wärmetauschern übertragene Anteil an der insgesamt übertragenen Wärmeleistung größer ist als der im Kessel übertragene Anteil.

4. Heizeinrichtung nach Anspruch 3, **dadurch gekennzeichnet, daß** der in den Wärmetauschern übertragene Anteil etwa 55 bis 65 % der gesamten Wärmeleistung beträgt.

5. Heizeinrichtung nach einem der vorangehenden Ansprüche, **dadurch gekennzeichnet, daß** das Abgas aus den einzelnen Wärmetauschern jeweils gesondert zu dem Abgassystem des Gebäudes, in dem die Heizeinrichtung installiert ist, geführt ist.

6. Heizeinrichtung nach einem der Ansprüche 1 bis 4, **dadurch gekennzeichnet, daß** das Abgas aus den einzelnen Wärmetauschern in einem Abgassammler (7) zusammengeführt und als Sammelstrom zu dem Abgassystem des Gebäudes, in dem die Heizeinrichtung installiert ist, geführt ist.

7. Heizeinrichtung nach einem der vorangehenden Ansprüche, **dadurch gekennzeichnet, daß** die Wärmetauscher aus Edelstahl bestehen.

8. Heizeinrichtung nach einem der vorangehenden Ansprüche, **dadurch gekennzeichnet, daß** die Abgastemperatur nach den Wärmetauschern ca. 10 % über der Temperatur des Rücklaufwassers liegt.

9. Heizeinrichtung nach einem der vorangehenden Ansprüche, **dadurch gekennzeichnet, daß** die Heizeinrichtung in einem klapp- oder zerlegbaren Rahmen untergebracht ist.

10. Heizeinrichtung nach Anspruch 9, **dadurch gekennzeichnet, daß** wenigstens eine Abmessung des Rahmens im geklappten oder zerlegten Zustand nicht mehr als 60 cm beträgt.

11. Heizeinrichtung nach einem der vorangehenden Ansprüche, **dadurch gekennzeichnet, daß** der Kesselkörper aus Stahl, insbesondere ST 37, gefertigt ist.

## Claims

1. A heating device for a hot-water heating plant with a rated power of at least about 100 kW, comprising a single-duct steel boiler containing a combustion chamber (1) having a jacket (9) with an inner surface forming a first heat exchanger surface and containing a water pipe, one end of which is connected to a return pipe (8) and the other end to a flow pipe (12), wherein the combustion chamber (1) has a burner (2) at its front end and the heat exchanger surface for conveying the heat of the combustion gases to the heating water is in the form of at least two flue-gas heat exchangers (3, 4) disposed on the return pipe (8) near the outside of the boiler (1), **characterised in that** a part of the return water flows through each of the flue gas heat exchangers (3, 4), which are connected in parallel.

2. A heating device according to claim 1, **characterised in that** each heat exchanger (3, 4) is in the form of a return pipe (8a, 8b), wherein the return pipes (8a, 8b) in the region between the heat exchangers and the boiler are combined in a single pipe (8) which is connected to the boiler.

3. A heating device according to claim 1 or 2, **characterised in that** the boiler and the heat exchangers are designed so that the proportion of the total heating power conveyed in the heat exchangers is greater than the proportion conveyed in the boiler.

4. A heating device according to claim 3, **characterised in that** the proportion conveyed in the heat exchangers is about 55 to 65% of the total heating power.

5. A heating device according to any of the preceding claims, **characterised in that** the flue gas from the individual heat exchangers is separately conveyed to the flue-gas system of the building in which the heating device is installed.

6. A heating device according to any of claims 1 to 4, **characterised in that** the flue gas from the individual heat exchangers is combined in a collector (7) and the combined flow is conveyed to the flue-gas system of the building in which the heating device is installed.

7. A heating device according to any of the preceding claims, **characterised in that** the heat exchangers are made of special steel.

8. A heating device according to any of the preceding claims, **characterised in that** the flue gas temperature downstream of the heat exchangers is about 10% above the temperature of the return water.

9. A heating device according to any of the preceding claims, **characterised in that** the heating device is disposed in a foldable or dismountable frame.

10. A heating device according to claim 9, **characterised in that** at least one dimension of the frame in the folded or dismounted state is not more than 60 cm.

11. A heating device according to any of the preceding claims, **characterised in that** the boiler body is made of steel, particularly ST 37.

## Revendications

1. Appareil de chauffage pour une installation de chauffage à eau chaude présentant une puissance nominale d'au moins approximativement cent kW, comportant une chaudière en acier qui présente une chambre de combustion (1), qui est réalisée sous une forme à passage unique et dont l'espace d'enveloppe (9), dont la surface interne forme une première surface d'échangeur de chaleur, comprend une conduite d'amenée d'eau dont une extrémité est raccordée à une conduite de retour (8) et l'autre extrémité à une conduite montante (12), la chambre de combustion (1) étant équipée d'un brûleur (2) à son extrémité du côté frontal et la sulface d'échangeur de chaleur, pour le transfert de la chaleur des gaz de combustion à l'eau chaude étant formée par au moins deux échangeurs de chaleur à gaz de combustion (3, 4) agencés sur la conduite de retour (8) en-dehors de la chaudière (1) et au voisinage de celle-ci,
***caractérisé en* ce *que*** les échangeurs de chaleur à gaz de combustion (3, 4) sont traversés, dans un montage en parallèle, respectivement par une partie de l'eau de retour.

2. Appareil de chauffage suivant la revendication 1, **caractérisé en ce que** chaque échangeur de chaleur (3, 4) est réalisé sous la forme d'une conduite de retour (8a, 8b), les conduites de retour (8a, 8b) étant réunies, dans la zone entre les échangeurs de chaleur et la chaudière, en une conduite unique (8) qui est raccordée à la chaudière.

3. Appareil de chauffage suivant la revendication 1 ou 2, **caractérisé en ce que** la chaudière et les échangeurs de chaleur sont dimensionnés de façon à ce que, par rapport à la puissance calorifique transmise au total, la portion transmise dans les échangeurs de chaleur est supérieure à la portion transmise dans la chaudière.

4. Appareil de chauffage suivant la revendication 3, **caractérisé en ce que** la portion transmise dans les échangeurs de chaleur s'élève à approximativement 55 à 65 % de la puissance calorifique totale.

5. Appareil de chauffage suivant l'une des revendications précédentes, **caractérisé en ce que** le gaz de combustion est amené chaque fois séparément des échangeurs de chaleur distincts jusqu'au système de gaz de combustion du bâtiment dans lequel est installé l'appareil de chauffage.

6. Appareil de chauffage suivant rune des revendications 1 à 4, **caractérisé en ce que** le gaz de combustion en provenance des échangeurs de chaleur distincts est réuni dans un collecteur de gaz de combustion (7) et est amené sous la forme d'un écoulement réuni au système de gaz de combustion du bâtiment dans lequel est installé l'appareil de chauffage.

7. Appareil de chauffage suivant l'une des revendications précédentes, **caractérisé en ce que** les échangeurs de chaleur sont constitués d'acier allié.

8. Appareil de chauffage suivant l'une des revendications précédentes, **caractérisé en ce que** la température de gaz de combustion après les échangeurs de chaleur se situe approximativement 10 % au-dessus de la température de l'eau de retour.

9. Appareil de chauffage suivant l'une des revendications précédentes, **caractérisé en ce que** l'appareil de chauffage est monté dans un châssis qui peut être replié ou démonté.

10. Appareil de chauffage suivant la revendication 9, **caractérisé en ce qu'**au moins une dimension du châssis à l'état replié ou démonté ne s'élève pas à plus que 60 cm.

11. Appareil de chauffage suivant l'une des revendications précédentes, **caractérisé en ce que** le corps de chaudière est fabriqué en acier, en particulier en ST 37.
